# EUROPEAN PATENT APPLICATION

(11) **EP 0 978 472 A2**
(43) Date of publication of application: **09.02.2000**
(21) Application number: 99112762.2
(22) Date of filing: 01.07.1999
(51) Int. Cl.: B66C 23/70, B66F 11/04, B66F 9/065

(54) **Transportable crane**

(30) Priority: 01.07.1998 US 108389
(71) Applicant: Grove U.S. LLC, Shady Grove, Pennsylvania 17256 (US)
(72) Inventor: Barthalow, Henry D., Greencastle, Pennsylvania 17225 (US); Fleagle, Jon E., Waynesboro, Pennsylvania 17268 (US)
(74) Representative: Schwabe - Sandmair - Marx

(57) **Abstract**

A transportable multi-purpose crane includes a platform (50) having outriggers (52) disposed at opposite ends thereof. A turntable (54) is rotatably mounted to the platform (50) between the outriggers (52) on opposite ends of the platform (50), and has a center axis of rotation (55). A riser boom (50), having a first end and a second end, is pivotally mounted to the turntable (54) at its first end. The riser boom (56) points in a first direction with respect to the center axis of rotation (55), and is a telescoping boom. An upper boom (64), having a first end and a second end, has its first end pivotally mounted to the second end of the riser boom (56). The second end of the upper boom (64) supports a second load carrying device. The upper boom (64) points in a second direction, opposite the first direction, with respect to the center axis of rotation (55), and is a telescoping boom. By providing the riser boom (56) and the upper boom (64) such that the riser boom (56) serves as a counterweight when the second load carrying device carries a load, the crane does not need a separate counterweight.

## Description

### BACKGROUND OF THE INVENTION

### 1. Field of the Invention.

The present invention relates to a transportable telescopic boom crane having improved up and over capabilities, and/or which does not need a counterweight.

### 2. Description of Related Art.

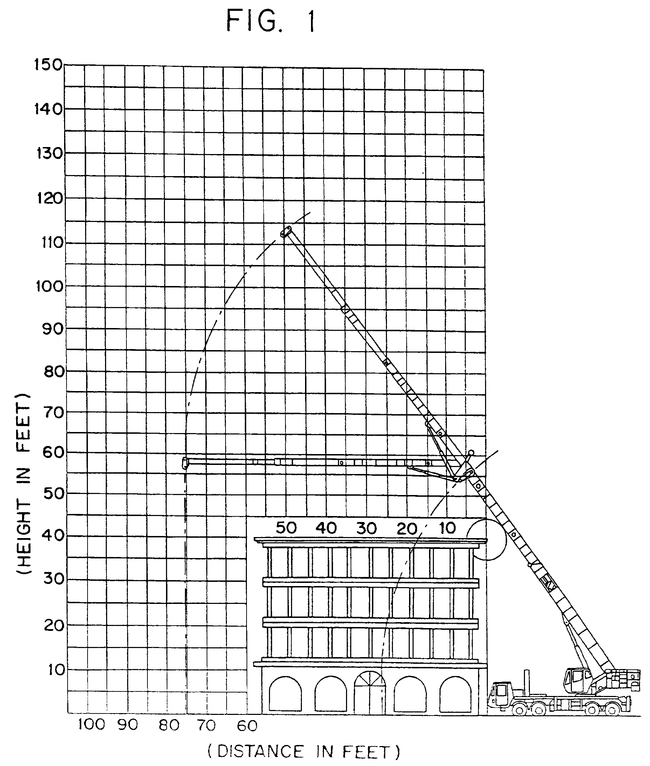

At almost any work site a crane can be seen lifting heavy loads to dizzying heights. The use of a mobile telescopic boom crane, however, can present many logistical problems for even the most skilled construction crew. Problems arise with respect to getting the crane to the work site, and whether or not the crane chosen can perform the assigned task once at the work site. For instance, take the classic up and over lift illustrated in Fig. 1. As shown in Fig. 1, construction is ongoing at a building, and a load of materials has to be lifted from the ground to the top of the building.

Several factors play an important role in deciding the size of the crane needed to perform this up and over lift. Those factors include the lift height, the boom length, the lift radius, space constraints, and the mass of the load. The lift height is the height to which the load must be lifted, and directly influences the height the boom must achieve to make the lift. Accordingly, lift height also influences the boom length needed to make the lift. The lift radius is the distance between the load and the crane during the lift. As one skilled in the art knows, the further the load is from the crane, the heavier the crane needed so that the crane does not tip over during the lift. Lift radius also influences the boom length.

As our cities and towns have become more and more crowded, the factor of space constraints has increased in importance. Space constraints tends to directly influence the lift radius and the boom length. For instance, suppose that the space constraints at a particular work site prohibit placing the crane near the load. Viewed another way, the crane needed to perform the lift, even if placed near the load, is too large for the space available near the load. Accordingly, the crane will have to be positioned further from the load causing an increase in the lift radius, and thus, requiring a larger crane to perform the lift. Furthermore, obstacles may restrict movement of the boom resulting in an increase in both the lift radius and boom length. As with the lift radius, the greater the boom length, the larger the crane, which has a longer boom, needed to perform the lift.

Cranes are given a standardized rating in tons based on their lifting capabilities. For instance, a 100 ton telescopic boom crane can lift 100 tons with the telescopic boom fully retracted at a minimum rated radius, while a 1 ton crane can lift 1 ton with the boom fully retracted at a minimum rated radius.

As further examples, suppose 10 tons are to be lifted 100 feet, 75 feet and 40 feet at a radius of 10 feet from the crane. To perform the 100 foot lift would require a conventional 100 ton crane, to perform the 75 foot lift would request a conventional 50 ton crane, and to perform the 40 foot lift would require a conventional 25 ton crane.

Returning to the up and over lift illustrated in Fig. 1, a load on one side of a building needs to be lifted to the top of the building. As shown in Fig. 1, the building is 40 feet tall and 60 feet wide. Due to space constraints, however, the crane must be positioned on the opposite side of the building from the load; hence the name up and over lift.

Fig. 1 also illustrates the other type of space constraint, the building. The building places a restriction on the placement of the boom during the lift. Namely, the crane must be placed a specified distance from the building in order for the boom to clear the top edge of the building during the lift. Accordingly, the boom height is greatly increased. To perform the up and over lift of Fig. 1 using the conventional crane illustrated, requires at least a 70 ton crane. Only a conventional crane of this size has a long enough boom structure to make the lift. Depending on the load or if a different type of conventional crane is used; an even larger crane might be rewired.

Furthermore, the space constraints which prohibited positioning the crane on the same side of the building as the load may exist all the way around the building. As a result, the crane may have to be positioned even further from the load requiring an even larger crane to perform the lift. Additionally, conventional cranes require a counterweight to prevent them from tipping over. The larger the load to be lifted and/or the greater the lifting radius, the larger the counterweight needed and/or the further from the platform the counterweight must be disposed, albeit still connected thereto. Accordingly, the amount the counterweight is disposed away from the platform (i.e., the tail swing) can contribute greatly to the amount of space required for proper operation of the crane.

Having chosen a crane large enough to perform the lift, the construction crew is now faced with the problem of getting the crane to the work site. In a best case scenario, the crane is simply driven to the work site. Unfortunately, various laws exist which regulate loads placed on the roadways. Accordingly, while a 70 ton crane is needed to perform the lift, the roadways leading to the work site may only permit, at most, a 50 ton crane to travel thereon. Furthermore, conditions at the work site itself may not support such a large crane.

Conventional cranes have significant tail swings and limited boom configurations. As such construction crews typically experience many of the problems discussed above when using a conventional crane to perform an up and over lift.

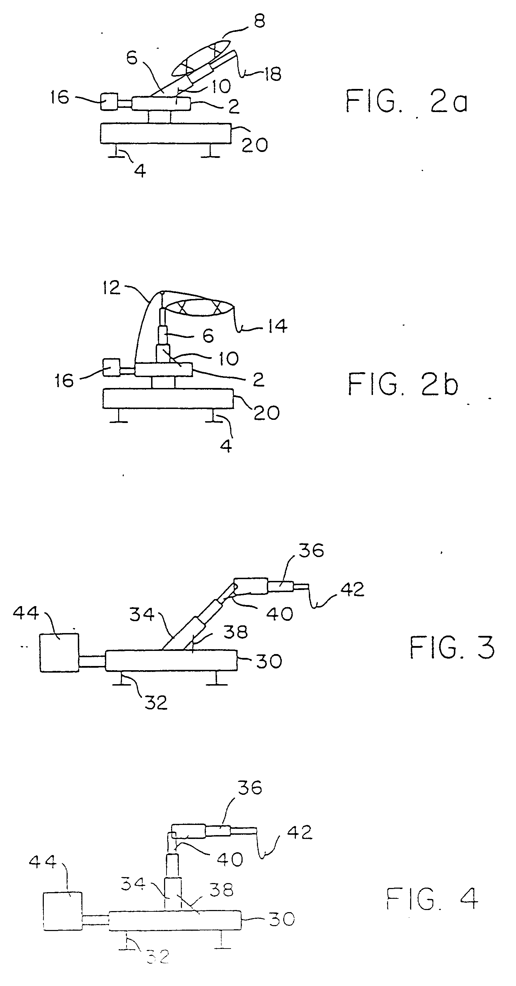

Figs. 2a-4 are schematic drawings illustrating different conventional multiple boom crane configurations which suffer from one or more of the above discussed draw backs. Figs. 2a and 2b represent the transportable crane described in U.S. Patent 3,572,517 to Liebherr. As shown in Fig. 2a, the Liebherr crane includes a rotary platform 2 mounted on a chassis 20. The chassis 20 is supported by outriggers 4 on either end. Pivotally connected to the platform 2 is a telescoping mast 6 which supports a load carrying hook 18. A hydraulic cylinder 10 elevates the telescoping mast 6. Disposed on top of the telescoping mast 6 is a jib 8. A movable counterweight 16 is disposed at an end of the platform 2 to prevent the crane from tipping. The counterweight 16 is movable with respect to the platform 2, and is moved further from the platform 2 to increase the counterweighting effect.

Fig. 2b illustrates another use of the transportable crane disclosed by Liebherr. In this configuration, the hydraulic cylinder 10 positions the mast 6 perpendicular with respect to the platform 2 to form a rotary tower crane. A sheave and cable system 12 in combination with the extension of telescoping mast 6 is then used to pivot the jib 8 relative to the vertical mast 6. As shown in Fig. 2b, the jib 8 supports a load carrying hook 14. In the Liebherr crane, the jib 8 can only be used to support a load via the load carrying hook 14 when the mast 6 is disposed vertical to the platform 2.

Fig. 3 illustrates another multiple boom conventional crane configuration. This crane configuration was used in the up and over lift example of Fig. 1. As shown in Fig. 3, this crane includes a platform 30 supported by outriggers 32. A first telescoping boom 34 has a first end pivotally mounted to the platform 30. The first boom 34 points towards a first end of the platform 30, and is elevated by a hydraulic cylinder 38. A second telescoping boom 36 is pivotally connected to a second end of the first boom 34. The second boom 36 also points towards the first end of the platform 30 as the first boom 34, and is elevated relative to the first boom 34 by a hydraulic cylinder 40. The second boom 36 supports a load carrying hook 42. To prevent the crane from tipping over, a counterweight 44 is disposed at the second end of the platform 30.

Fig. 4 illustrates the crane of Fig. 3 with the first boom 34 elevated to achieve a maximum elevation with respect to the platform 30.

### SUMMARY OF THE INVENTION

The transportable crane according to the present invention includes a platform having outriggers disposed at opposite ends, and a turntable rotatably mounted to the platform between the outriggers on opposite ends of the platform and having a center axis of rotation. A riser boom, having a first end and a second end, has its first end pivotably mounted to the turntable. The riser boom points in a first direction with respect to the center axis of rotation, and the riser boom does not support a load carrying device for carrying a load. An upper boom, having a first end and a second end, has its first end pivotably mounted to the second end of the riser boom, and the upper boom points in a second direction, opposite the first direction, with respect to the center axis of rotation.

Other objects, features, and characteristics of the present invention; methods, operation, and functions of the related elements of the structure; combination of parts; and economies of manufacture will become apparent from the following detailed description of the preferred embodiments and accompanying drawings, all of which form a part of this specification, wherein like reference numerals designate corresponding parts in the various figures.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Fig. 1 illustrates a conventional crane performing an up and over lift;
Figs. 2a-4 are schematic diagrams illustrating conventional crane configurations;
Fig. 5 illustrates a side view of an embodiment of the crane according to the present invention;
Figs. 6A and 6B illustrate the telescoping mechanisms for the riser boom and upper boom, respectively, of the crane according to the present invention;
Figs. 7-9 illustrate a front, rear and top view, respectively, of the crane according to the present invention;
Figs. 10-12 illustrate possible upper boom positions for different riser boom positions;
Fig. 13 illustrates an embodiment of the crane according to the present invention wherein the upper boom supports a work platform;
Fig. 14 illustrates an embodiment of the crane according to the present invention wherein the upper boom supports a fork lift; and
Fig. 15 illustrates the crane of the present invention performing the same up and over lift as illustrated with respect to a convention crane in Fig. 1.

### DETAILED DESCRIPTION OF THE PREFERRED EMBODIMENTS

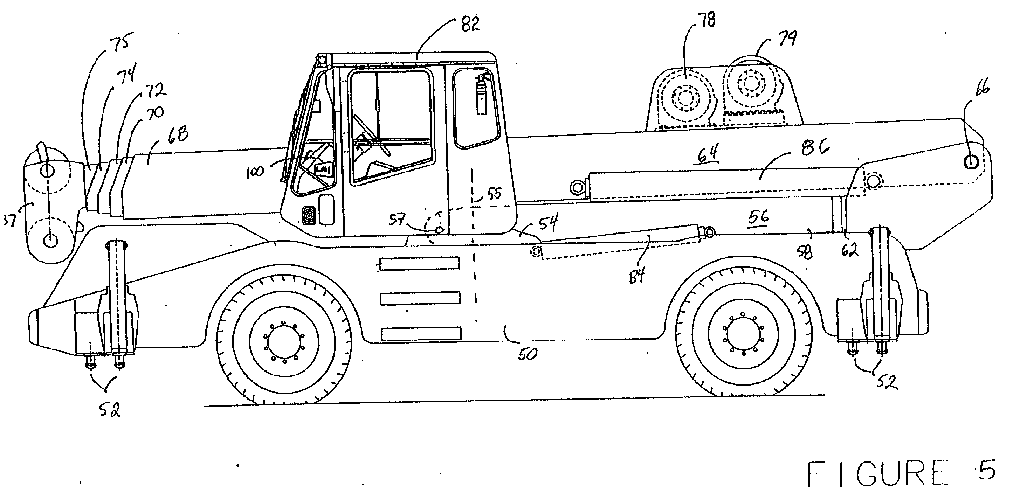

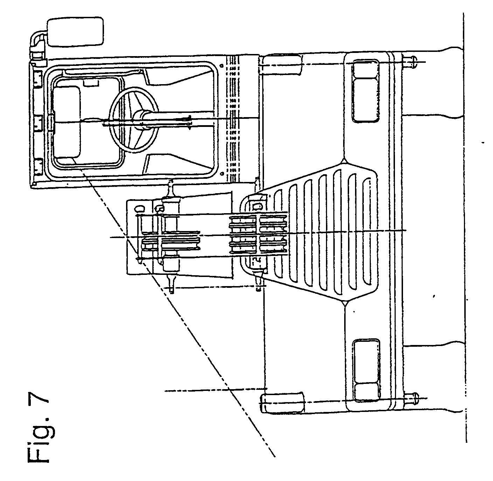

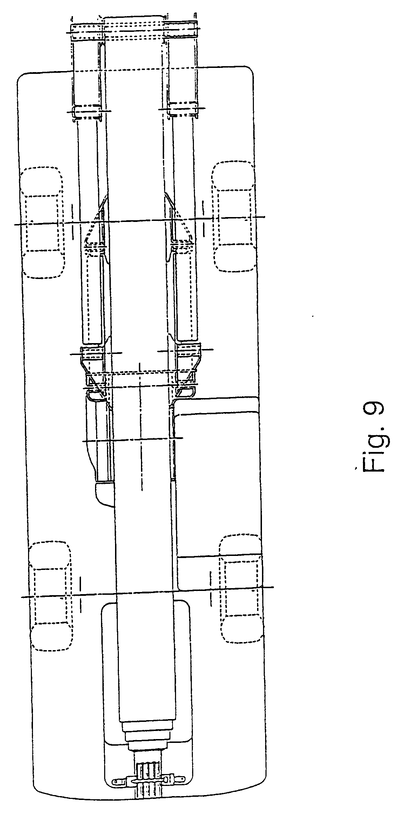

Fig. 5 illustrates a side view of an embodiment of the crane accordingly to the present invention, and Figs. 7, 8 and 9 illustrate front, rear and top views, respectively, of the crane according to the present invention. Referring to Fig; 5, the crane includes a chassis 50 having front and rear extendable and retractable outriggers 52. When the crane reaches a work site, the outriggers 52 are deployed to lift the chassis 50 off the ground and to level the chassis 50.

A turntable 54 is rotatably mounted to the chassis 50, and has a center axis of rotation 55. A riser boom 56 is pivotally mounted to the turntable 54 at a riser boom pivot connection 57, and extends or points in one direction with respect to the center axis of rotation 55. One skilled in the art will recognize from the disclosure, that the pivot connection 57 could be made on the other side of the center axis of rotation. The riser boom 56 is a multi-section telescoping boom having a base section 58 and a fly section 62. A riser boom elevation or lift cylinder 84 connected between the turntable 54 and the riser boom 56 controls the elevation of the riser boom 56.

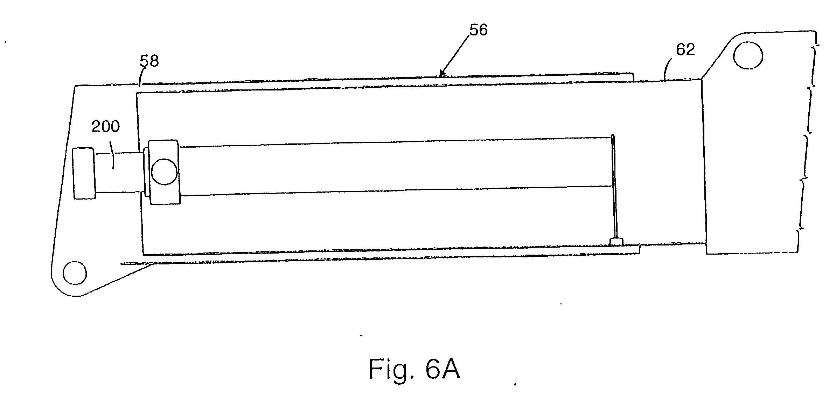

The riser boom 56 also includes a telescoping mechanism as illustrated in Fig. 6A; whereby the various boom sections are telescopically movable relative to each other by hydraulic cylinder/piston assemblies mounted inside the riser boom 56 between the respective boom sections, in a conventional manner, or by other conventional boom extension mechanisms.

As shown in Fig. 6A, the telescoping mechanism for the riser boom 56 includes a single stage telescoping cylinder 200. The telescoping cylinder 200 is connected to the base section 58 and the fly section 62. During operation, the telescoping cylinder 200 extends and retracts to extend and retract the fly section 62 with respect to the base section 58.

An upper boom 64 is pivotally connected to the riser boom 56 at an upper boom pivot connection 66, and points in the opposite direction that the riser boom 56 points with respect to the center axis of rotation 55. The upper boom 64 is a multi-section telescoping boom having a base section 68, an inner mid section 70, a mid section 72, an outer mid section 74, and a fly section 75. An upper boom elevation or lift cylinder 86 connected between the upper boom 64 and the riser boom 56 controls the elevation of the upper boom 64.

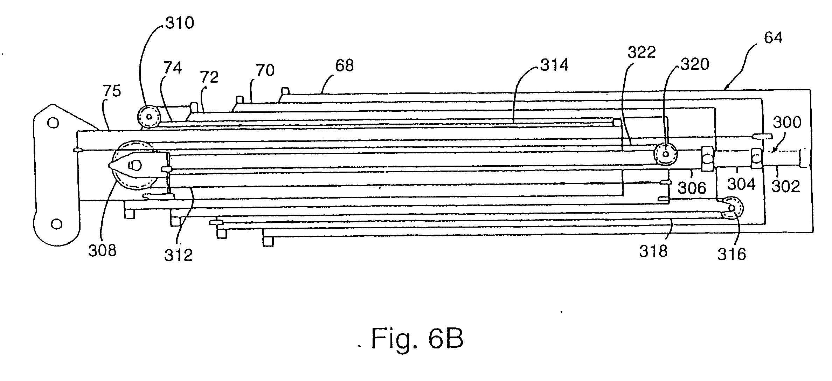

As illustrated in Fig. 6B, the upper boom 64 includes a telescoping mechanism whereby the various boom sections are telescopically movable relative to each other by hydraulic cylinder/piston assemblies mounted inside the upper boom 64 between the respective boom sections, in a conventional manner, or by other conventional boom extension mechanisms. As shown in Fig. 6B, the telescopic mechanism for the upper boom 64 includes a two-stage telescoping cylinder 300 having a rod 302, a first cylinder 304, and a second cylinder 306. The rod 302 is connected to the base section 68, the first cylinder 304 is connected to the inner mid section 70, and the second cylinder 306 is connected to the mid section 72. A first extension sheave 308 is mounted at the end of the second cylinder 306, and a first extension cable 312 is anchored to the proximal end of the inner mid section 70 and the proximal end of outer mid section 74. A second extension sheave 310 is mounted at the distal end of the outer mid section 74, and a second extension cable 314 is anchored to the distal end of the mid section 72 and the proximal end of the fly section 75. A first retraction sheave 316 is mounted to the proximal end of the mid section 72, and a first retraction cable 318 is anchored at the distal end of the inner mid section 70 and the proximal end of the outer mid section 74. A second retraction sheave 320 is mounted on the proximal end of the outer mid section 74, and a second retraction cable 322 is anchored to the distal end of the fly section 75 and the distal end of the second cylinder 306.

During operation, the first cylinder 304 extends and retracts to extend and retract the inner mid section 70. The second cylinder 306 extends and retracts to extend and retract the mid section 72. The first extension sheave 308 and the first extension cable 312 cause the outer mid section 74 to extend synchronously with the extension of the mid section 72. The second extension sheave 310 and the second extension cable 314 cause the fly section 75 to extend synchronously with the extension of the outer mid section 74. The first retraction sheave 316 and the first retraction cable 318 cause the outer mid section 74 to retract synchronously with the retraction of the mid section 72. The second retraction sheave 320 and the second retraction cable 322 cause the fly section 75 to retract synchronously with the retraction of the outer mid section 74.

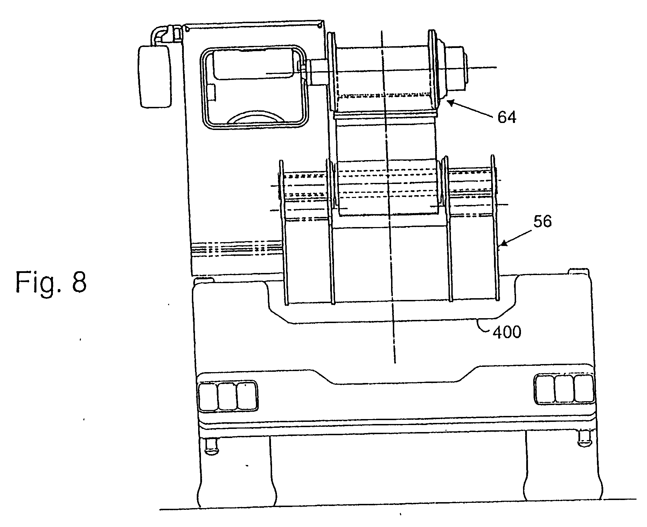

The upper boom 64 and the riser boom 56 have an inline relation. Also, as shown in Figs. 5 and 8, the chassis 50 has a U-shaped channel 400 such that when fully retracted by the riser boom lift cylinder 84, the riser boom 56 partially nests in the chassis 50 and is disposed horizontally. The upper boom 64 achieves a negative angle with respect to horizontal when the upper boom lift cylinder 86 and the riser boom lift cylinder 84 are fully retracted. The positioning of the riser boom 56 and the upper boom 64 when the upper boom lift cylinder 86 and the riser boom lift cylinder 84 fully retract as described above permits a clear line of sight for an operator in the cab 82. Also, in alternative embodiments, the upper boom 64 can establish an angle of -2° to 12°, preferably negative, with respect to horizontal when the upper boom lift cylinder 86 and the riser boom lift cylinder 84 are fully retracted, so long as the operator in the cab 82 has a substantially clear line of sight.

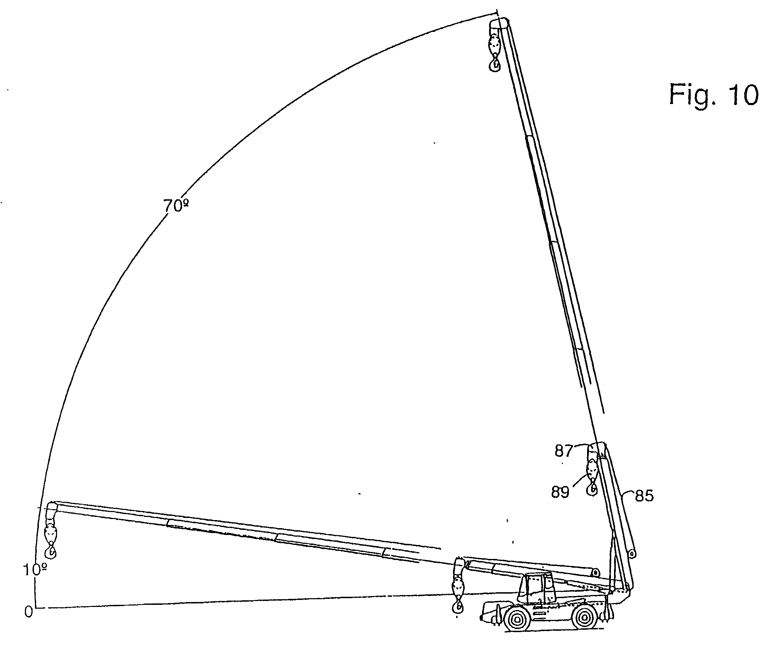

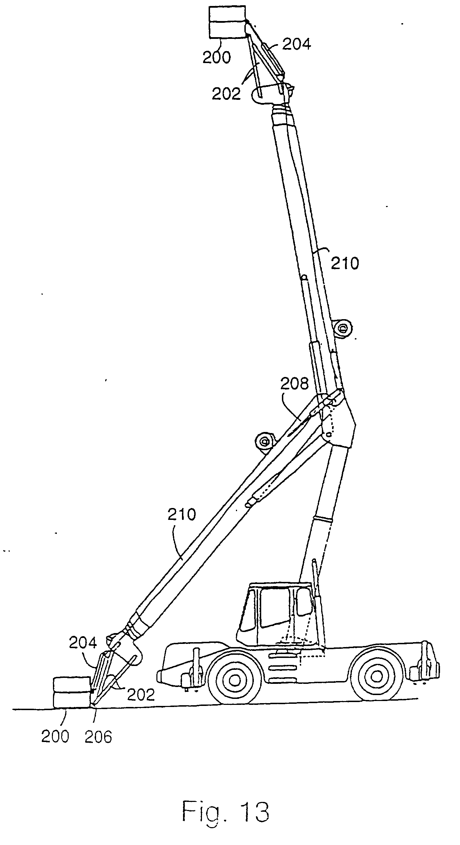

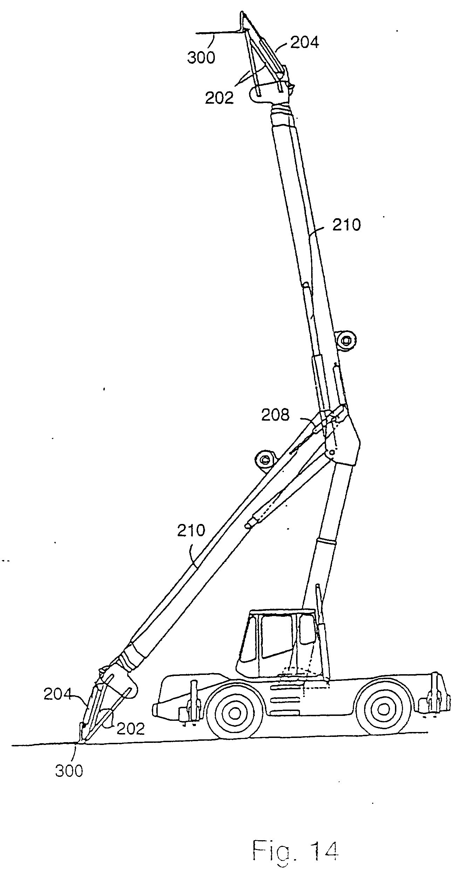

Disposed on the upper boom 64 is an upper boom hoist 78 and an auxiliary hoist 79. As shown in Figs. 10, 11 and 12, the upper boom hoist 78 controls the deployment of a lift cable 85 supported by boom nose assembly 87 on the terminal end of the upper boom 64 and connected to a load carrying hook assembly 89 or other well known load carrying device. While not illustrated, the auxiliary hoist 79 assists the upper boom hoist 78, when needed, in performing lifting operations. As discussed in further detail below with respect to Figs. 13 and 14, the upper boom 64 is not limited to supporting a load carrying device connected to a cable.

An operators cab 82 is connected to the turntable 54 and includes the controls for the crane. The operators cab 82 is a rotatable cab, and may be rotated to face either end of the chassis 50. The controls for the crane are conventional controls and include an electronic load moment indicator (LMI) system 100. The LMI system 100 has been programmed to assist the operator in maintaining the crane within certain empirically determined operating limits discussed in detail below. As one skilled in the art knows, conventional LMI systems monitor the operating characteristics of the crane, such as boom angles, boom lengths, and loads thereon, and warn the operator that the crane is achieving unwanted operating characteristics. For instance, the LMI system assists the crane operator by warning the operator when lifting a load in a manner which would cause the crane to tip over. The LMI system 100 of the present invention operates in the same manner except that the operating characteristics are significantly different from conventional cranes. In a preferred embodiment, the LMI system 100 of the present invention is a DS350G made by PAT Equipment Corporation, Inc. programmed to assist the operator in maintaining the crane within the empirically determined operating limits discussed in detail below.

In designing the crane according to the present invention, the inventors determined that the following factors influence the center of gravity for the crane when lifting a load (i.e, the combined center of gravity of the chassis 50, the riser boom 56, the upper boom 64 and the load being lifted): the length and weight of the riser boom 56, the length and weight of the upper boom 64, the distance between the front and rear outriggers 52 on either end of the chassis 50, the extension lengths of the outriggers, the distances from the center axis of rotation 55 to the outriggers 52 on either end of the chassis 50 (which determines the riser boom pivot connection 57 with respect to the outriggers 52), the weight of the chassis 50, the angle between the riser boom 56 and chassis 50 when level (the riser boom angle), the angle between the upper boom 64 and the chassis 50 when level (the upper boom angle), and the mass of the load being supported by the upper boom 64. As one skilled in the art will note, some of these factors are variable operating characteristics of the crane.

The inventors then determined that if they could design the crane such that the center of gravity for the crane remained within the ground engaging outriggers 52 on either side of the chassis 50 during a lifting operation, no counterweight would be needed during the lifting operation. Furthermore, the inventors realized by disposing the riser boom 56 and upper boom 64 to point in opposite directions with respect to the center of rotation 55 that during a lifting operation the riser boom 56 serves as a counterweight. Namely, when lifting a load, the center of gravity for the upper boom 64 acts to shift the center of gravity for the crane in one direction, and the center of gravity of the riser boom 56 has the opposite effect. Therefore, by maintaining operating characteristics of the crane (e.g., riser and upper boom angles, etc.) within empirically determined limits via the LMI system, the center of gravity for the crane could be maintained within the area subscribed by the ground engaging outriggers 52.

Through empirical design, the inventors set the above factors such that the center of gravity for the crane is maintained within the outriggers 52 on either end of the chassis 50. For those factors which are variable operating characteristics of the crane, operating ranges were empirically determined. For example, ranges of riser boom and upper boom angles when lifting various weight loads at various lift radii, and at various lift heights were empirically determined. The LMI system is then programmed with the empirically determined limits on the operating characteristics. As one skilled in the art will readily appreciate, based on the forgoing disclosure one skilled in the art can empirically determine the above discussed factors to develop a crane meeting desired operating characteristics without undue experimentation.

Since the center of gravity of the crane according to the present invention remains within the outriggers 52, the crane according to the present invention does not need a counterweight. As a result, the crane according to the present invention has no tail swing. As an added benefit the crane is considerably lighter than conventional cranes which perform the same lifting operation so it has a lighter per axle load for road travel.

Furthermore, the rating of a crane according to the present invention could easily be increased through the addition of a fixed counterweight.

Next, the operation of the crane according to the present invention will be discussed with respect to Figs. 10-12. Fig. 10 illustrates various possible positions of the upper boom 64 when the riser boom 56 is in its stowed position. As shown in Fig. 10, the upper boom hoist 78 controls the deployment of a cable 85 supported by the upper boom 64 and connected to a load carrying hook 89. As further illustrated in Fig. 10, the upper boom 64 can be elevated by the upper boom elevation cylinder 86 through a plurality of upper boom angles. While Fig. 10 illustrates the upper boom 64 being moved from a 0 degree upper boom angle to a 70 degree upper boom angle, the upper boom 64 can achieve any upper boom angle between 0 and 90 degrees which maintains the center of gravity for the crane within the outriggers 52.

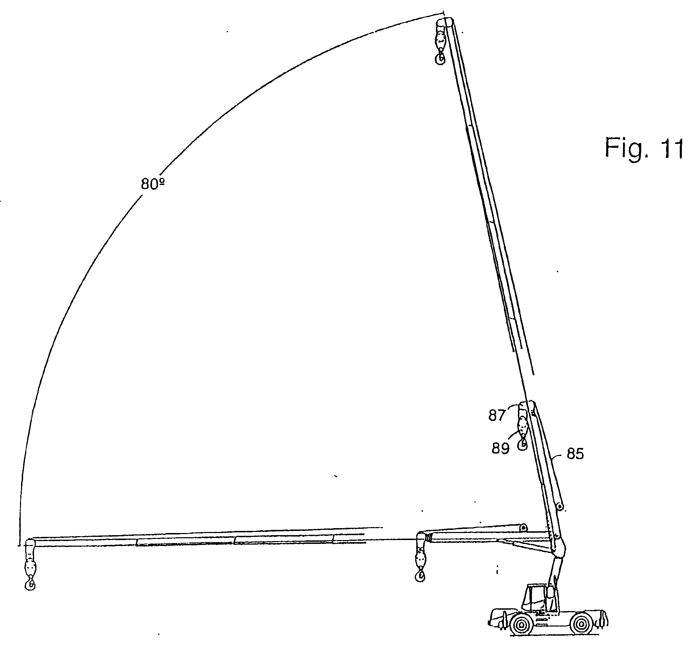

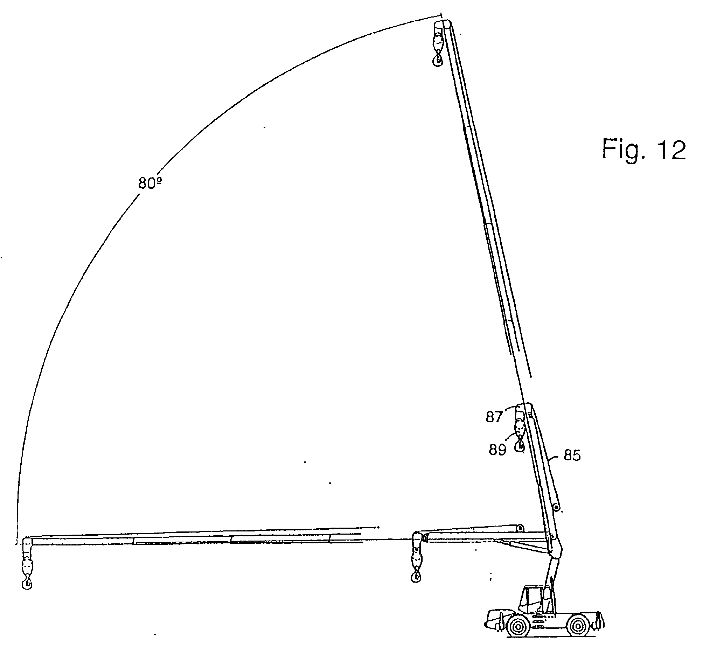

Figs. 11 and 12 are similar to Fig. 10, except that Fig. 11 illustrates the riser boom 56 elevated and retracted, and Fig. 12 illustrates the riser boom 56 elevated and extended. While Figs. 11 and 12 illustrates the upper boom 64 being moved from a 0 degree upper boom angle to an 80 degree upper boom angle, the upper boom 64 can achieve any upper boom angle less than or equal to 90 degrees, including a negative upper boom angle, which maintains the center of gravity for the crane within the outriggers 52. Furthermore, while Figs. 11 and 12 show the riser boom 56 at a particular riser boom angle, the riser boom angle can be varied so long as the center of gravity for the crane remains within the outriggers 52.

Fig. 13 illustrates an embodiment of the crane according to the present invention wherein the upper boom 64 supports a work platform 200. A well-known and conventional support bracket 202 connects the work platform 200 to the boom nose assembly 87. A master piston 204 is connected between the boom nose assembly 87 and the work platform 200, and positions the work platform 200 about a pivot point 206, in response to the movement of a slave piston 208, to maintain the work platform 200 level. The slave piston 208 is connected between the upper boom 64 and the riser boom 56. The upper boom 64 causes the slave piston 208 to retract as the upper boom 64 is raised, and the upper boom 64 causes the slave piston 208 to extend as the upper boom 64 is lowered. A line 210 hydraulically connects the slave piston 208 and the master piston 204 such that hydraulic fluid flowing into and out of the slave piston 208 flows out of and into the master piston 204 to control the operation thereof.

Fig. 14 illustrates an embodiment of the crane according to the present invention wherein the upper boom 64 supports a fork lift 300. The same well-known support bracket 202, master cylinder 204, slave cylinder 208, and line 210 discussed above with respect to Fig. 13 connects the forklift 300 to the boom nose assembly 87 and maintains the fork lift 300 level throughout the operating range of the upper boom 64.

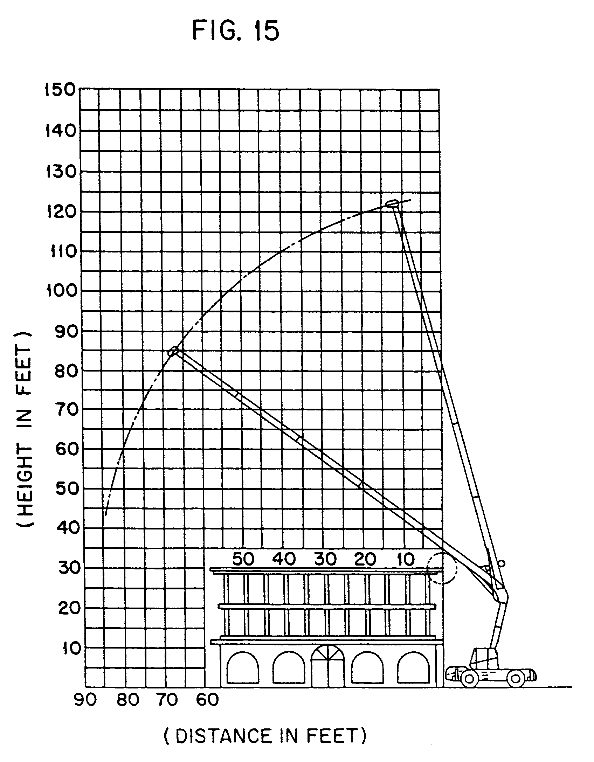

Fig. 15 illustrates a crane according to the present invention performing the same up and over lift illustrated in Fig. 1. The crane according to the present invention, however, only needs to have a rating of 40 tons to perform the same lift due to the unique arrangement of the upper boom 64 with respect to the riser boom 56. Factors in achieving this advantage include the contribution of the riser boom 56 to the overall lift height and the multiplicative effect on overall boom height achieved by adding telescopic sections to the riser boom 56 and the upper boom 64. Furthermore, since no counterweight is needed, the crane according to the present invention has significantly less tail swing than the conventional crane.

Because, according to the present invention, a much smaller crane can perform the same lift as a much larger conventional crane and in less space, the crane according to the present invention may meet space constraints which prohibited positioning the conventional crane. Additionally, the lighter crane according to the present invention is more likely to be able to access the work site, and satisfy road weight requirements.

While the invention has been described in connection with what is presently considered the most practical and preferred embodiments, it is to be understood that the invention is not limited to the disclosed embodiments, but on the contrary, is intended to cover various modifications and equivalent arrangements included within the spirit and scope of the appended claims.

## Claims

1. A transportable crane, comprising:
a platform (50) having outriggers (52) disposed at opposite ends;
a turntable (54) rotatably mounted to said platform (50) between said outriggers (52) on opposite ends of said platform (50) and having a center axis of rotation (55);
a riser boom (56) having a first end and a second end, said first end being pivotably mounted to said turntable (54), said riser boom (56) pointing in a first direction with respect to said center axis of rotation (55), and said riser boom (56) does not support a load carrying means for carrying a load;
an upper boom (64) having a first end and a second end, said first end being pivotably mounted to said second end of said riser boom (56), and said upper boom (64) pointing in a second direction, opposite said first direction, with respect to said center axis of rotation (55); and
an electronic controller (100) prohibiting said crane from exceeding specified operating ranges and controlling said riser boom (56) and said upper boom (64) such that a combined center of gravity including said riser boom (56), said upper boom (64), and said platform (50) remains within said outriggers (52) on opposite ends of said platform (50) so that said crane does not need a separate counterweight.

2. The crane of claim 1, wherein said riser boom (56) is a telescoping boom.

3. The crane of claim 2, wherein said upper boom (64) is a telescoping boom.

4. The crane of claim 1, wherein said upper boom (64) is a telescoping boom.

5. The crane of claim 1, wherein said upper boom (64) supports a load carrying means for carrying a load.

6. The crane of claim 5, wherein said load carrying means is a work platform (200).

7. The crane of claim 5, wherein said load carrying means is a fork lift (300).

8. The crane of claim 1, wherein said electronic controller (100) prevents said riser boom (56) from pivoting to a point where said second end thereof crosses said center of rotation (55).

9. The crane of claim 1, wherein said electronic controller (100) prohibits said riser boom (56) from achieving an angle with respect to said platform (50) of greater than or equal to 90.

10. The crane of claim 1, wherein
said upper boom (64) supports a load carrying means for carrying a load; and
said electronic controller (100) controls said riser boom (56) and said upper boom (64) such that a combined center of gravity including said riser boom (56), said upper boom (64), said platform (50) and a load carried by said load carrying means remains within said outriggers (52) on opposite ends of said platform (50) such that said crane does not need a separate counterweight.

11. The crane of claim 1, further comprising:
first and second telescopic cylinders (84) connected between said turntable (54) and said riser boom (56) on either side of said riser boom (56); and wherein
said platform (50) has a channel (400) formed therein; and
said riser boom (56) is horizontal and nests in said channel (400) when said first and second telescopic cylinders (84) are retracted.

12. The crane of claim 11, further comprising:
third and fourth telescopic cylinders (86) connected between said second end of said riser boom (56) and said upper boom (64) on either side of said upper boom (64) such that when retracted, said upper boom (64) establishes a negative angle with respect to horizontal.

13. The crane of claim 12, further comprising:
an operator cab (82) disposed on said turntable (54) such that when said first, second, third and fourth telescopic cylinders (84,86) are retracted, said operator cab (82) allows an operator to overlook said upper boom (64).

14. A transportable crane, comprising:
a platform (50) having outriggers (52) disposed at opposite ends;
a turntable (54) rotatably mounted to said platform (50) between said outriggers (52) on opposite ends of said platform (50) and having a center axis of rotation (55);
a riser boom (56) having a first end and a second end, said first end being pivotably mounted to said turntable (54), said riser boom (56) pointing in a first direction with respect to said center axis of rotation (55), and said riser boom (56) does not support a load carrying means for carrying a load;
an upper boom (64) having a first end and a second end, said first end being pivotably mounted to said second end of said riser boom (56), said upper boom (64) supporting a load carrying means for carrying a load, and said upper boom (64) pointing in a second direction, opposite said first direction, with respect to said center axis of rotation (55); and
an electronic controller (100) prohibiting said crane from exceeding specified operating ranges, and controlling said riser boom (56) and said upper boom (64) so that said riser boom (56) serves as a counterweight when said load carrying means carries a load such that said crane does not need a separate counterweight.

15. The crane of claim 14, wherein said riser boom (56) is a telescoping boom.

16. The crane of claim 14, wherein said upper boom (64) is a telescoping boom.

17. The crane of claim 14, wherein said load carrying means is a work platform (200).

18. The crane of claim 14, wherein said load carrying means is a fork lift (300).

19. The crane of claim 14, wherein said electronic controller (100) prevents said riser boom (56) from pivoting to a point where said second end thereof crosses said center of rotation (55).

20. The crane of claim 14, wherein said electronic controller (100) prohibits said riser boom (56) from achieving an angle with respect to said platform (50) of greater than or equal to 90 degrees.

21. A transportable crane, comprising:
a platform (50) having a channel (400) formed therein;
a turntable (54) rotatably mounted to said platform (50);
a riser boom (56) having a first end and a second end, said first end being pivotably mounted to said turntable (54);
first and second telescopic cylinders (84) connected between said turntable (54) and said riser boom (56) on either side of said riser boom (56) such that when retracted said riser boom (56) nests in said channel (400) and is horizontal; and
an upper boom (64) having a first end and a second end, said first end being pivotably mounted to said second end of said riser boom (56).

22. The crane of claim 21, further comprising:
third and fourth telescopic cylinders (86) connected between said second end of said riser boom (56) and said upper boom (64) on either side of said upper boom (64) such that when retracted, said upper boom (64) establishes an angle between -2° and 12° with respect to horizontal.

23. The crane of claim 21, further comprising:
third and fourth telescopic cylinders (86) connected between said second end of said riser boom (56) and said upper boom (64) on either side of said upper boom (64) such that when retracted, said upper boom (64) establishes a negative angle with respect to horizontal.

24. The crane of claim 23, further comprising:
an operator cab (82) disposed on said turntable (54) such that when said first, second, third and fourth telescopic cylinders (84, 86) are retracted, said operator cab (82) allows an operator to overlook said upper boom (64).
